# EUROPEAN PATENT APPLICATION

(11) **EP 1 728 812 A1**
(43) Date of publication of application: **06.12.2006**
(21) Application number: 06114779.9
(22) Date of filing: 31.05.2006
(51) Int. Cl.: C08G 65/26

(54) **Process for manufacturing a pellet-shaped nonionic alkylene oxide resin**

(30) Priority: 02.06.2005 JP 2005163274; 02.06.2005 JP 2005163275
(71) Applicant: NIPPON SHOKUBAI CO., LTD., Osaka-shi, Osaka 541-0043 (JP); DAI-ICHI KOGYO SEIYAKU CO., LTD., Kyoto-shi, Kyoto 600-8873 (JP)
(72) Inventor: Tamura, Fumihide, Shiga 525-0023 (JP); Okada, Izuho, Hyogo 671-1146 (JP); Wakami, Hideo, Shiga 523-0891 (JP); Toba, Taketo, Hyogo 665-0815 (JP); Mizushima, Makoto, Osaka 564-0023 (JP); Takamiya, Shigetaka, 148955, Singapore (SG); Horo, Shinichi, Osaka 564-0024 (JP); Kono, Michiyuki, Osaka 572-0082 (JP); Tezuka, Masaki, Shiga 525-0059 (JP); Tanaka, Hiroshi, Hyogo 657-0056 (JP); Yokohashi, Takao, Kyoto 615-0863 (JP); Kikuta, Manabu, Kyoto 610-0311 (JP)
(74) Representative: Henkel, Feiler & Hänzel

(57) **Abstract**

An object of the present invention is to provide a manufacturing process by which a pellet-shaped nonionic alkylene oxide resin can be obtained in a manner which is excellent in stability, economical efficiency and productivity and easy, wherein the pellet-shaped nonionic alkylene oxide resin, as a high-molecular material useful in a variety of applications, has a suitable molecular weight Mw and physical properties and is also excellent in the stability of the physical properties and further is also excellent in the handling property after the manufacture. As a means of achieving this object, the process for manufacturing a pellet-shaped nonionic alkylene oxide resin, according to the present invention, comprises the steps of: obtaining a nonionic alkylene oxide resin having fluidity by volatilizing a solvent from a nonionic alkylene oxide resin solution obtained in advance by solution polymerization; and then pelletizing the nonionic alkylene oxide resin having fluidity.

## Description

### BACKGROUND OF THE INVENTION

### A. TECHNICAL FIELD

The present invention relates to a process for manufacturing a pellet-shaped nonionic alkylene oxide resin.

### B. BACKGROUND ART

Nonionic alkylene oxide resins are useful as polymer materials in applications, for example, polyurethane resins for such as adhesives, paints, sealants, elastomers, and flooring, and besides, hard, soft or semihard polyurethane resins, and further, surfactants, sanitary products, deinking agents, lubricating oil, and operating oil. In recent years, in view of their possibilities, it is being considered utilizing them in various new applications other than the above-mentioned ones.

As processes for manufacturing nonionic alkylene oxide resins, there have so far been known a process of obtaining the resins by the bulk polymerization, a process in which the resin component is separated by filtration or centrifugation from the reaction liquid after the precipitation polymerization and then dried to obtain the resin, and a process in which a poor solvent is added to the reaction solution after the solution polymerization to precipitate (reprecipitate) the resin component, which is thereafter recovered by filtration or centrifugation and then dried to obtain the resin (for example, see Patent Documents 1 to 3).

However, in the above-mentioned bulk polymerization, it is very difficult to raise the weight average molecular weight, Mw, of the nonionic alkylene oxide resins to the prescribed level, so that there was such a problem that high-molecular materials of about 20,000 to about 500,000 in molecular weight Mw, which are useful in the above-mentioned various applications, could not be obtained easily. Moreover, there was also such a problem that it was very difficult to remove heat during the polymerization and to control the viscosity of the resin being obtained.

In contrast, the above-mentioned precipitation polymerization and solution polymerization have such advantages that resins with sufficient molecular weights can be obtained and it is also possible to remove heat and to control the viscosity. Furthermore, because in the precipitation polymerization and solution polymerization, usually the nonionic alkylene oxide resins are obtained in the state of powder by heat-drying after separating by filtration and the like from the solvent, there is an advantage that it is possible to treat them in the state of solid without any solvent. However, on the other hand, since the solid form is powder, danger that the generation of static electricity by such as friction between powder particles leads to the dust explosion is very high, while because solvents being used as the poor solvents include a lot of flammable ones, it is necessary to mix an additive such as an antistatic agent into the resin powder beforehand. Therefore, there are problems that in addition to being inferior in the economical efficiency, the addition of the additive such as antistatic agent greatly deteriorates the physical properties or makes the resin powder unusable for their applications according to circumstances of the applications. Besides, the precipitation polymerization and the solution polymerization also have problems of being inferior in productivity and taking high costs because after the polymerization or reprecipitation, it is inevitable to carry out the filtration or centrifugation in order to obtain the solid resin.

When the nonionic alkylene oxide resins were obtained in the state of powder form, they very easily fly at the time of charging and the like, so it is extremely difficult to accurately adjust (weigh out) the amount of them used. Because the nonionic alkylene oxide resins abound in hygroscopicity inherently and are more hygroscopic all the more if they are powder, there is such a problem that their moisture content greatly differs (there occurs remarkable dispersion in moisture content) according to their handling environment or preservation environment in comparison with the other resins, thus resulting in unstable physical properties of resins.
[Patent Document 1] JP-A-05-017566 (Kokai)
[Patent Document 2] JP-A-05-310908 (Kokai)
[Patent Document 3] WO 03/040210

### SUMMARY OF THE INVENTION

### A. OBJECT OF THE INVENTION

Thus, an object of the present invention is to provide a manufacturing process by which a solid, namely, pellet-shaped, nonionic alkylene oxide resin can be obtained in a manner which is excellent in stability, economical efficiency and productivity and easy, wherein the pellet-shaped nonionic alkylene oxide resin, as a high-molecular material useful in a variety of applications, has a suitable molecular weight Mw and physical properties and is also excellent in the stability of the physical properties and further is also excellent in the handling property after the manufacture.

### B. DISCLOSURE OF THE INVENTION

The present inventors diligently studied to solve the above-mentioned problems. In its process, they considered that if nonionic alkylene oxide resins were obtained not in the powdery form but in a pelletized form, then the problem of dust explosion could be avoided and the use of the additive such as antistatic agent could be also avoided. Thus, they decided to devise a means of realizing the pelletization easily. As a result, they have found that: if there is carried out a process in which first a resin solution is obtained by the solution polymerization and thereafter only the solvent component is volatilized from the resin solution (i.e. the resin solution is devolatilized) under heat-mixing to thus keep a state of the resin having fluidity and thereafter, as it is, the resin is subjected to the pelletization, then it is avoidable to obtain the resin once in the state of powder as in the cases of supposing the above-mentioned conventional polymerization methods, and therefore, also from the industrial viewpoint, the above process has very high productivity and is also excellent in economical efficiency, and further the nonionic alkylene oxide resin can be obtained in a high safety state without the danger of dust explosion, and further with ease.

By the way, as for nonionic alkylene oxide resins, there is also another problem of requiring caution for their handling in order to suppress the strength of their moisture absorption. However, the present inventors have confirmed from a variety of experiments that the dispersion in the moisture content is greatly decreased if the nonionic alkylene oxide resin is in the pellet shape, and also have found that the difficulty of adjusting (weighing out) the amount of the resin being used can also be solved easily by pelletizing the nonionic alkylene oxide resin. Thus they have completed the present invention.

That is to say, a process for manufacturing a pellet-shaped nonionic alkylene oxide resin, according to the present invention, comprises the steps of: obtaining a nonionic alkylene oxide resin having fluidity by volatilizing a solvent from a nonionic alkylene oxide resin solution obtained in advance by solution polymerization; and then pelletizing the nonionic alkylene oxide resin having fluidity.

### C. EFFECTS OF THE INVENTION

The present invention can provide a manufacturing process by which a pellet-shaped nonionic alkylene oxide resin can be obtained in a manner which is excellent in stability, economical efficiency and productivity and easy, wherein the pellet-shaped nonionic alkylene oxide resin, as a high-molecular material useful in a variety of applications, has a suitable molecular weight Mw and physical properties and is also excellent in the stability of the physical properties and further is also excellent in the handling property after the manufacture.

### BRIEF DESCRIPTION OF THE DRAWINGS

Fig. 1 is an explanatory drawing figure showing an experimental apparatus used in Demonstrational Example 17.
Fig. 2 is an explanatory drawing figure showing another experimental apparatus used in Demonstrational Example 17.

### DETAILED DESCRIPTION OF THE INVENTION

Hereinafter, detailed descriptions are given about the process for manufacturing a pellet-shaped nonionic alkylene oxide resin according to the present invention (hereinafter this process may be referred to as "manufacturing process of the present invention"). However, the scope of the present invention is not bound to these descriptions. And other than the following illustrations can also be carried out in the form of appropriate modifications of the following illustrations within the scope not departing from the spirit of the present invention.

Hereinafter, the nonionic alkylene oxide resin and its manufacturing and finishing to a product will be described in detail.

### <Nonionic alkylene oxide resin and its manufacturing>:

### (Nonionic alkylene oxide resin):

The nonionic alkylene oxide resin (hereinafter, its meaning is defined as including ethylene oxide copolymers) is such that as for its molecular structure, as long as it is a structure having an ether bond derived from an alkylene oxide monomer such as ethylene oxide monomer in the main chain, the constitution of the other portions is not especially restricted.

As the nonionic alkylene oxide resin, a resin manufactured by polymerizing raw monomers containing ethylene oxide and a substituted oxirane compound shown by the following structural formula (1) is preferable. The polymerization of this case is ring-opening polymerization of an oxirane group derived from the substituted oxirane compound. 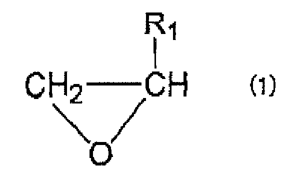 (wherein R₁ is a Ra group or -CH₂-O-Re-Ra group wherein: Ra is any one of an alkyl group, a cycloalkyl group, an aryl group, an aralkyl group, a (meth)acryloyl group, and an alkenyl group of 1 to 16 in carbon number; and Re is a group having a structure of-(CH₂-CH₂-O)ₚ- (p is an integer of 0 to 10).)

The R₁ group in the above-mentioned structural formula (1) is a substituent in the substituted oxirane compound.

The substituted oxirane compound may be only one kind of compound shown by the above-mentioned structural formula (1) or those comprising two kinds or more.

Specific examples of the substituted oxirane compound shown by the structural formula (1) include propylene oxide, butylene oxide, 1,2-epoxypentane, 1,2-epoxyhexane, 1,2-epoxyoctane, cyclohexene oxide, and styrene oxide, or methyl glycidyl ether, ethyl glycidyl ether, and ethylene glycol methyl glycidyl ether, and further when the substituent R₁ is a cross-linkable substituent, that is, the substituent R₁ has an aryl group, an alkenyl group, an acryloyl group, a methacryloyl group, and the like, then examples of the substituted oxirane compound further include epoxybutene, 3,4-epoxy-1-pentene, 1,2-epoxy-5,9-cyclododecadiene, 3,4-epoxy-1-vinylcyclohexene, 1,2-epoxy-5-cyclooctene, glycidyl acrylate, glycidyl methacrylate, glycidyl sorbate, and glycidyl 4-hexanoate, or vinyl glycidyl ether, allyl glycidyl ether, 4-vinylcyclohexylglycidyl, α-terpenyl glycidyl ether, cyclohexenylmethyl glycidyl ether, p-vinylbenzyl glycidyl ether, and allylphenyl glycidyl ether.

In order to use the nonionic alkylene oxide resin in the form of a cross-linked one, it is preferable to use the substituted oxirane compound in which the substituent R₁ is a cross-linkable substituent as the substituted oxirane compound.

Although not especially restricted, as the nonionic alkylene oxide resin, those having 90 to 97 mole % of a constituent unit derived from ethylene oxide monomer in the molecular structure are preferable. Similarly, a constituent component derived from a compound monomer included in the group consisting of the substituted oxirane compounds is preferably 3 to 10 mole % though not especially restricted.

The nonionic alkylene oxide resin may contain, in its molecular structure, a constituent component derived from a monomer other than the compounds included in the group consisting of ethylene oxide and the substituted oxirane compounds, within the range where the above-mentioned content ranges of the various monomers (the group consisting of ethylene oxide and the substituted oxirane compounds) are met.

The weight average molecular weight of the nonionic alkylene oxide resin is preferably 20,000 to 500,000, more preferably 50,000 to 200,000, and still more preferably 40,000 to 130,000. When the weight average molecular weight is less than 20,000, there is a tendency that tack occurs to a molding, and when over 500,000, there is a tendency that the molding operation becomes so difficult that the processibility and the handling property are deteriorated.

The molecular weight distribution of the nonionic alkylene oxide resin is preferably 3 or less, and more preferably 2 or less. When the molecular weight distribution is over 3, there is a tendency that when the resin is molded, tack occurs to the resultant molding, so that the handling is deteriorated. Hereupon, the molecular weight distribution means a ratio of the weight average molecular weight to the number average molecular weight (weight average molecular weight/number average molecular weight).

### (Polymerization):

### -Synthesis of nonionic alkylene oxide resin by polymerization ― polymerization step-

In the polymerization step in the manufacturing process of the present invention, the solution polymerization method is adopted as the polymerization method to obtain the nonionic alkylene oxide resin. This adoption of the solution polymerization method is made in order to mold the pellet-shaped resin by way of the below-mentioned devolatilizing step and is a characteristic constitution of the present invention. Above all, a solution polymerization is particularly preferable in which: the prescribed solvent charged in advance is used as the solvent, and this solvent is heated to the prescribed reaction temperature if necessary, and then a polymerization initiator is added thereto, and then the polymerization is carried out while the monomer component is being fed thereto; because this solution polymerization is excellent in safety such that the heat of reaction can be easily removed.

The solvents used in the solution polymerization preferably include, for example, aromatic hydrocarbon solvents such as benzene, toluene, xylene, and ethylbenzene; aliphatic hydrocarbon solvents such as heptane, octane, n-hexane, n-pentane, and 2,2,4-trimethylpentane; alicyclic hydrocarbon solvents such as cyclohexane and methylcyclohexane; ether solvents such as diethyl ether, dibutyl ether, and methyl butyl ether; ethylene glycol dialkyl ether solvents such as dimethoxyethane, ethylene glycol dimethyl ether, propylene glycol dimethyl ether, diethylene glycol dimethyl ether, and dipropylene glycol dimethyl ether; and cyclic ether solvents such as THF (tetrahydrofuran) and dioxane. Among them, toluene and xylene are particularly preferable. As to the solvent, a solvent which has been used in the previous polymerization may be recovered by volatilization and then reused.

The solution polymerization reaction is preferably carried out in the following way. That is, to the total 100 mole parts of monomers comprising 95 mole parts of ethylene oxide and 5 mole parts of a substituted oxirane compound shown by the structural formula (1), there is added 0 to 5 mole parts of another monomer to thereby constitute raw monomers, and their polymerization is carried out in the existence of 10 to 300 weight parts of a solvent relative to the total 100 weight parts of the raw monomers at a temperature of 90 to 120°C for 1 to 10 hours.

In the manufacturing process of the present invention, arranging that the moisture content of the nonionic alkylene oxide resin solution obtained after the polymerization step, that is, obtained by the solution polymerization, will be less than 7000 ppm is preferable in terms of easily controlling the moisture content of the nonionic alkylene oxide resin as the final product, and the above-mentioned moisture content is more preferably less than 200 ppm and still more preferably less than 50 ppm. When the moisture content of the resin solution after the polymerization step is not less than 7000 ppm, there is an unfavorable possibility that the manufacturing cost may rise greatly in the case of obtaining a product of a law moisture content (particularly about 100 ppm).

Means for adjusting and controlling the moisture content of the resin solution after the polymerization step as mentioned above include, for example, controlling the moisture content of the monomers (comonomers) and solvent to be used in the polymerization reaction and regulating the moisture adhering to the apparatus to be used for carrying out the polymerization reaction (e.g. reaction vessel, raw-material tank, piping, valves). In order to suppress the moisture content of the monomers (comonomers) and solvent to be used in the polymerization reaction to a lower one, for example, it is preferable to use them after subjecting them to the dehydration treatment by passing them through a dehydration tower before using them in the polymerization reaction.

As to the liquid and the gas as raw materials, they are passed through mesh (e.g. filter, sieve, strainer), whereby it is possible to prevent the mingling of foreign bodies.

### (Treatment after polymerization):

### -Recovery of nonionic alkylene oxide resin ― devolatilizing step-

In the manufacturing process of the present invention, in order to obtain the nonionic alkylene oxide resin from the reaction liquid after the nonionic alkylene oxide resin has been synthesized by the polymerization reaction using a solvent (i.e. solution polymerization) (i.e. nonionic alkylene oxide resin solution after the above-mentioned polymerization step), the solvent used as the solvent is volatilized (that is, devolatilization is carried out) under heating to thereby recover the nonionic alkylene oxide resin. If such a method is adopted, then the nonionic alkylene oxide resin having been recovered once after the polymerization reaction does not need to be powdered or melted and can be recovered in a state having fluidity under heating from the beginning. Therefore, taking the subsequent pelletization into consideration, it follows that such a manufacturing process is an easy manufacturing process which is very good in productivity and excellent in economical efficiency.

Hereupon, the devolatilization means that the nonionic alkylene oxide resin is obtained from the polymerization reaction liquid (resin solution) containing the nonionic alkylene oxide resin, the solvent, and the residual monomers by volatilizing and removing the solvent and the residual monomers therefrom. As for the degree of the devolatilization, the nonionic alkylene oxide resin does not need to be in a completely solvent-free state, but it is enough that the solvent is in a desired concentration or less.

The concentration of the solvent in the nonionic alkylene oxide resin after the devolatilization is preferably 0.01 to 30 weight %, more preferably 0.05 to 10 weight %, and still more preferably 0.1 to 10 weight %. If the concentration of the solvent is attempted to reduce to less than 0.01 weight %, then the devolatilization conditions need to be severe, and such conditions have an unfavorable possibility of leading to the thermal degradation of the nonionic alkylene oxide resin to cause the performance deterioration. On the other hand, if the concentration of the solvent is over 30 weight %, there is an unfavorable possibility that tack may occur to the nonionic alkylene oxide resin after the devolatilization, thus resulting in occurrence of such as blocking.

Incidentally, although the solvent component in the polymerization reaction liquid usually means a solvent to be used when carrying out the polymerization, yet in the case where another solvent is added to the reaction liquid (resin solution) after the polymerization, this other solvent is also defined as being implied in the above-mentioned solvent component.

As for the method for the devolatilization and the apparatus and various conditions to be used when carrying out the devolatilization, it will do to adopt such as prior publicly known methods, usable apparatuses, and set conditions for the devolatilization, so there is no particular limitation. Apparatuses to be used when carrying out the devolatilization (devolatilization apparatuses) preferably include a stirring-tank evaporator, a down-flow liquid column evaporator, a thin-film evaporator, a thin-film evaporator for high viscosity, a surface renewal type polymerization reactor, a kneader, a roll mixer, an intensive mixer (so-called Banbury mixer), a KRC kneader, and an extruder. The use conditions can suitably be set according to the apparatus being used.

Temperature during the devolatilization is preferably 40 to 300°C, more preferably 60 to 250°C, and still more preferably 90 to 200°C. By controlling the temperature so as to meet this range, the solvent concentration can be adjusted in the above-mentioned range, and the moisture content can also be adjusted in the above-mentioned range. When the temperature during the devolatilization is less than 40°C, there is an unfavorable possibility that much solvent may remain. When over 300°C, there is an unfavorable possibility that the nonionic alkylene oxide resin itself may pyrolyze. Hereupon, the above temperature during the devolatilization is defined as specifically meaning the temperature of the nonionic alkylene oxide resin in the devolatilization apparatus.

Pressure during the devolatilization is preferably 13 to 100,000 Pa, more preferably 133 to 70,000 Pa, and still more preferably 1333 to 40,000 Pa. By controlling the pressure so as to meet this range, the solvent concentration as a result of the devolatilization can be adjusted in the above-mentioned range, and the moisture content as a result of the devolatilization can also be adjusted in the above-mentioned range. When the pressure during the devolatilization is less than 13 Pa, there is an unfavorable possibility that the solvent may flush to cause foaming. When over 100,000 Pa, there is an unfavorable possibility that the temperature may need to be raised to such a high temperature that the nonionic alkylene oxide resin may decompose. Hereupon, the above pressure during the devolatilization specifically means the internal pressure of the devolatilization apparatus.

The nonionic alkylene oxide resin after the devolatilization is a resin obtained by the above-mentioned devolatilization under heating and is therefore a resin which is warm and has fluidity. The temperature of the nonionic alkylene oxide resin after the devolatilization is preferably 40 to 300°C, more preferably 60 to 250°C, and still more preferably 90 to 200°C.

When the moisture content of the resin as the final product is considered, this moisture content is preferably less than 7000 ppm, more preferably 200 ppm or less, and still more preferably 50 ppm, at the end of the devolatilization (specifically, at the time of having been discharged from the devolatilization apparatus).

The moisture mentioned hereupon is usually that which was included in such as the above-mentioned apparatus used to conduct the polymerization reaction besides the monomers (comonomers) and solvent used in the polymerization, and can be included in the resin when the resin is synthesized.

The nonionic alkylene oxide resin after the devolatilization can be defined as not containing any antistatic agent. Its reason is because in the nonionic alkylene oxide resin obtained not by the method in which the resin is separated by filtering or centrifugation after the precipitation polymerization or after the reprecipitation by the addition of a poor solvent after the solution polymerization and then dried by heating, but by the method in which the reaction liquid (resin solution) is devolatilized after the solution polymerization, no antistatic agent needs to be included in consideration of the electrification caused by such as mutual friction of the resin (resin powder) under drying by heating. However, as the occasion demands, an antistatic agent can be included even in the nonionic alkylene oxide resin obtained after the devolatilization.

The viscosity of the nonionic alkylene oxide resin after the devolatilization is preferably 5000 to 100000 poise, more preferably 10000 to 80000 poise, and still more preferably 15000 to 60000 poise, in the case of 99 weight % or more in solid content and 100°C. When the viscosity is less than 5000 poise, there is an unfavorable possibility that foaming and tack are caused, and when over 100000 poise, there is an unfavorable possibility that the viscosity may be too high to carry out the devolatilization.

In the manufacturing process of the present invention, the solvent removed by the devolatilizing step may be, for example, recovered, and then be reused in the solution polymerization step. Specifically, it is preferable that the volatilized solvent is subjected to purification treatment to remove light portions and heavy portions therefrom, and then dehydrated by being passed through a dehydration tower, and then reused. Apparatuses, conditions and the like for conducting the above-mentioned purification treatment and dehydration treatment are not particularly restricted, but conventional treatment apparatuses, conditions and the like may be properly selected and adopted. Incidentally, as for the above-mentioned reuse, even if a monomer component is contained in the solvent being purified and dehydrated, there is no problem, and the solvent can be used in the polymerization reaction in the recycling stage.

### -Addition of such as stabilizing agent ― addition step-

In the manufacturing process of the present invention, there is a case where before the below-mentioned pelletizing step is carried out, various additives such as stabilizing agents which are typified by antioxidants are added to the nonionic alkylene oxide resin being in the fluidized state after the devolatilization. That is, various additives can be added to the nonionic alkylene oxide resin solution during the polymerization step, after the polymerization step, or during the devolatilizing step and/or to the nonionic alkylene oxide resin after the devolatilizing step and, as the occasion demands, for example, mixed and kneaded therewith. Specifically, it is common that after the nonionic alkylene oxide resin has been obtained in the fluidized state by the devolatilizing step, various additives are added to the resin and, for example, mixed therewith. However, there is no particular restriction. For example, in the case of a process of a small amount of production, if various additives are added to the resin solution after the above-mentioned polymerization step or to the resin solution during the devolatilizing step, then it is possible to conduct the addition step together with the devolatilizing step.

The above-mentioned additives include, for example, an antioxidant (an oxidation inhibitor), a thermostabilizing agent, a photostabilizing agent, an ultraviolet absorbing agent, an antiseptic, a light resistance improving agent, plasticizers (e.g. dioctyl phthalate, low-molecular-weight polyether compounds), fillers (e.g. carbon, glass fibers, inorganic fibers), surfactants (e.g. ethylene oxide nonionic surfactants), and lubricants (e.g. calcium stearate).

In the addition step, such as organic fine particles, inorganic fine particles, and low-molecular-weight compounds besides the above-mentioned additives can also be added. The organic or inorganic fine particles can exhibit functions such as of preventing blocking according to the purpose or form of the use of the nonionic alkylene oxide resin. The organic fine particles include, for example, fine particles of polystyrene, polyethylene, polypropylene, and the like, and the inorganic fine particles include, for example, inorganic oxides such as silica, alumina, titania, and zirconia or their complex oxides.

In the addition step, there is a possibility that even such as additives that have already been added at the beginning of the polymerization or during the polymerization reaction as being components needed for the nonionic alkylene oxide resin as the final product may be decreased or removed in such as the devolatilizing step. Therefore, in such a case, similar additives may additionally be added again in a proper quantity.

In the addition step, when such as additives added need to be mixed uniformly into the resin, a kneader or the like is used. Specifically, when the addition step is also conducted together with the devolatilizing step as described above, the treatments of mixing and kneading are usually also made in the devolatilizing apparatus. Therefore, if additives and the like are only added, then mixing or the like is not needed to be carried out besides the addition. However, when additives and the like are added after the devolatilizing step, it is preferable to carry out also the mixing treatment in order to make the additives and the like contained more uniformly.

Examples of devices to be used in the addition step include: kneaders such as product name: Static Mixer, manufactured by Noritake Co., Limited and product name: Sulzer Mixer, manufactured by Sulzer Co., Ltd.; single screw extruders such as product name: GT Series, manufactured by Plastics Engineering Laboratory; twin-screw extruders or twin-screw kneaders such as kneaders, special kneaders, for example, KRC Kneader (product name: S2KRC Kneader, manufactured by Kurimoto, Ltd., product name: Kneader Ruder, manufactured by Moriyama Seisakusho Co., Ltd.). When these devices are used, it is preferable to connect these devices to the polymerization vessel and the resin melting vessel, or to the device used for the devolatilization when the devolatilizing step has been conducted, through such as a polymer pump or a gear pump.

### <Finishing of nonionic alkylene oxide resin to product>:

### -Pelletization of nonionic alkylene oxide resin - pelletizing step-

In the manufacturing process of the present invention, the nonionic alkylene oxide resin obtained by way of such as the solution polymerization step, the devolatilizing step, and the addition step which is conducted as the occasion demands is pelletized in the following way. Generally, the nonionic alkylene oxide resin after the devolatilization is cool-solidified and molded to thereby be formed into such shapes as can be easily made into the pellet shape, and subsequently such a shaped resin is used for the pelletization. However, the procedure is not especially restricted. Hereupon, the pellet shape, generally, has only to be particulate to such a degree that it can be distinguished from a powder. In addition, the pellet shape may have regular shapes such as of columns, strips, spheres, hemispheres, rugby balls, and rectangular parallelepipeds, or may have irregular shapes such as of crushed resin chips and flakes. Thus, the pellet shape is not especially restricted.

Though the size of the pellets being obtained is not especially restricted, the maximum outside diameter is preferably 0.1 to 50 mm and more preferably 1.0 to 30 mm.

### (Cool-solidifying step):

In the manufacturing process of the present invention, because the nonionic alkylene oxide resin after the devolatilizing step (hereinafter defined as including that after the addition step) is in the fluidized state and in a warm state, the step of cooling this resin to thereby solidify it is conducted. Though not especially restricted, the step of cooling the resin to thereby solidify it (hereinafter this step may be referred to as cool-solidifying step) is preferably, for example, a step in which the nonionic alkylene oxide resin being in the fluidized state after the devolatilization is brought into contact with a metal plate to thereby cool-solidify the resin.

Examples of the metal plate usable in the cool-solidifying step include metal plates or surfaces for cooling that can contact with the resin in cooling devices such as drum coolers (e.g. product name: COMPACT CONTI COOLER, manufactured by Tsubaco K. I. Corp., product name: Drum Cooler DC, manufactured by Mitsubishi Chemical Engineering Co., Ltd., and product name: Laminator, manufactured by Modem Machinery Co., Ltd.), single belt coolers (e.g. product name: Steel Belt Cooler, manufactured by Sandvik Co., Ltd., product name: Steel Belt Single Cooler, manufactured by Nippon Steel Conveyor Co., Ltd.), and a double belt cooler (e.g. product name: Double Steel Belt Cooler, manufactured by Sandvik Co., Ltd.). The metal plates or surfaces are cooled to desired temperatures by such as spraying refrigerants onto their the backsides. When the double belt cooler, the single belt cooler, and the drum cooler are used, conditions for any production amount can be easily obtained by selecting such as the cooling belt, the temperature of the refrigerant, the kind of the refrigerant, and the width of the T die or the widths of the drum and belt.

The cooling temperature of the metal plate or surface is, for example, such a temperature that such as the nonionic alkylene oxide resin being in the fluidized state after the devolatilizing step can be cooled to not higher than its crystallization temperature and/or melting point, and specifically it is preferably -20 to 40°C, more preferably 0 to 30°C, and still more preferably 5 to 25°C.

In the cool-solidifying step, usually, whichever cooling device of the above-mentioned may be used, the nonionic alkylene oxide resin after the devolatilizing step is discharged onto the metal plate or surface and cool-solidified while being conveyed thereon.

In order to peel the cooled resin from the above-mentioned metal plate or surface, a sheet of Teflon (registered trademark) can be stuck on the metal surface, or the metal surface can be treated with Teflon (registered trademark) or silicon.

### (Pelletizing step):

In the manufacturing process of the present invention, the nonionic alkylene oxide resin being in the fluidized state after the devolatilization is made into the pellet shape (particulate shape) as the final product. As its method, it is preferable that: before or at the same time as the above-mentioned cool-solidifying step, the nonionic alkylene oxide resin to be pelletized is once molded into shapes such as of sheets, strings (strands), and plates with such as an extruder (first molding step), and then this molding is processed into the pellet shape (pelletized) (second molding step). However, the resin may, from the beginning, be molded into the pellet shape and cooled. For instance, an example of, from the beginning, molding the resin into the pellet shape and cooling it is as follows: the nonionic alkylene oxide resin being in the fluidized state after the devolatilization is charged into a cylindrical drum with a plurality of vents (desired diameters) on the side, and the resin being in the fluidized state is dropped from the vents onto the cool-solidifying metal plate by rotating the drum around its horizontal central axis (circular axis), so that the pellet-shaped (particulate) resin is formed. Incidentally, the first molding step for molding the resin into shapes such as of sheets, strings, and plates may be conducted by casting the nonionic alkylene oxide resin into such as a container to be a mold for shaping.

Examples of the first molding step which is conducted at the same time as the above-mentioned cool-solidifying step include the aforementioned case where the nonionic alkylene oxide resin being in the fluidized state after the devolatilizing step is brought into contact with the cool-solidifying metal plate or surface as it is, wherein the resin is spread into a sheet shape at the same time as the contact. For raising the cool-solidifying efficiency, it is preferable to mold the resin into a sheet shape or plate shape in the molding step.

When the first molding step is conducted by extrusion molding, its preferable methods include: a method in which while the nonionic alkylene oxide resin is extracted from the aforementioned devolatilizing apparatus with a gear pump or the like connected to an outlet (resin-discharging outlet) of the devolatilizing apparatus, the above resin is extruded with an extruder further connected thereto; and a method in which a T die or a roll is used instead of the above-mentioned extruder.

Examples of the extruder include a single screw extruder, a twin-screw extruder (for example, product name: SUPERTEX αII), and an SCR self-cleaning type reactor (manufactured by Mitsubishi Heavy Industries, Ltd.). However, in order to extrude the resin into the sheet shape or plate shape of a definite thickness, it is preferable to extrude the resin through a T die provided to the extruder. In order to extrude the resin into the pellet shape or fine particulate shape, it is preferable to install a dropformer (product name: Roteform, manufactured by Sandvik Co., Ltd.).

The extruding thickness is preferably 0.1 to 50 mm, more preferably 1.0 to 30 mm, and still more preferably 1.5 to 25 mm, in consideration of such as the cooling efficiency in the cool-solidifying step and the size of the pellet shape made after the cool-solidifying step.

Examples of the device being used in the second molding step, that is, the pelletizing step, include a sheet pelletizer (for example, product name: Sheet Pelletizer SG(E)-220, manufactured by Horai Corp.) and a crusher (for example, a crusher manufactured by Horai Corp.). Among them, the sheet pelletizer is preferable in that the particle size of pellets being obtained can be easily made uniform. As for the sheet pelletizer, in the case such as where a resin having a low fluidizing point is cut, it is preferable to use a sheet pelletizer having a function such that a cutter part, particularly, a slitter roll part, can be cooled with a refrigerant or the resin can be cooled with cold wind in those parts. The cooling temperature for this purpose is preferably such a temperature that the nonionic alkylene oxide resin to be made into the pellet shape can be cooled to not higher than its crystallization temperature and/or melting point. Accordingly, the cooling temperature is preferably -20 to 40°C, more preferably 0 to 30°C, and still more preferably 5 to 25°C.

### -Classification of nonionic alkylene oxide resin pellets ― classifying step-

The manufacturing process of the present invention may include a classifying step where the nonionic alkylene oxide resin pellets obtained in the pelletizing step are classified into a prescribed particle size (those having a prescribed particle size are selected). In the classifying step, sieves are usually used. However, when considering the productivity of the resin pellets, for example, it is preferable to classify the resin pellets by running them on a vibrating inclined sieve, or to classify the resin pellets while revolving them on an inclined face of a horizontal trumpet-shaped sieve. It is usually preferable that the classifying step is connected directly with the pelletizing step and is conducted subsequently to the pelletizing step. However, for example, in cases where resin pellets are fused to each other after the pelletization, the classification may be conducted after, as needed, the fused resin pellets are dispersed into their individual unit pellets using a disintegrating machine.

The manufacturing process of the present invention may further comprise the above-mentioned classifying step, wherein the residual pellets other than the selected pellets having the prescribed particle size after the classification may be mixed into a nonionic alkylene oxide resin and/or its solution in at least one step before the above-mentioned pelletizing step (for example, the aging step after polymerization, the devolatilizing step, or the stage before entering the resin cooling just before the pelletization).

That is, usually, after the classification, the pellets other than the prescribed particle size are done away with. However, if such pellets are recycled (reused) by being returned to the fluidized state again, then the productivity and the economical efficiency are greatly enhanced. Moreover, when the above-mentioned addition step is included in the manufacturing process of the present invention, the step of mixing the residual pellets for recycling can be carried out in a way that they are mixed into a nonionic alkylene oxide resin and/or its solution in at least one step before the above-mentioned addition step (for example, the aging step after polymerization, the devolatilizing step, or the addition step). That is, in the present invention, the residual pellets can be recycled by being mixed in at least one step before the above-mentioned steps for molding and/or cooling the resin.

Similarly, in the manufacturing process of the present invention, the resin residue left behind in the above-mentioned first molding step and second molding step can be recycled by being mixed in the same step as the above-mentioned residual pellets, so that similar effects in productivity and economical efficiency can be obtained. For example, there is cited the resin residue left behind such as sheet edges which has not been made into resin pellets when the resin made into the sheet shape is pelletized with a sheet pelletizer.

### -Filling of nonionic alkylene oxide resin pellets ― filling step-

The manufacturing process of the present invention may further include a step (filling step) in which pellets of the nonionic alkylene oxide resin obtained by way of the pelletizing step are filled into a container for transportation, storage, and the like. Its purpose is to carry out the subsequent transportation and storage while the physical properties of the resin such as moisture content are maintained as much as possible. The container to be used for the filling may be those having a fixed shape or those having no fixed shape such as a bag, and preferable examples of the material of the container include an aluminum laminated film and a polyethylene film.

### <Control of moisture content ofnonionic alkylene oxide resin pellets>:

By the way, when the nonionic alkylene oxide resin is used in the prescribed applications including color filter protective films, materials for resists, and separators, electrodes and polymer electrolytes for polymer batteries, it is frequently problematic that the resin cannot exhibit desired useful properties as a polymer material including properties necessary during its manufacturing process, and its improvement has been requested.

The present inventors diligently studied to solve the above-mentioned problems. In its process, they have perceived that in order for the nonionic alkylene oxide resin to exhibit desired properties as a useful polymer material when used in the above-mentioned applications, it is very important to control the moisture content of this resin. Specifically, the present inventors could also know that if the moisture content of the resin was less than a prescribed value (7000 ppm), its excellent physical properties could be exhibited enough

Furthermore, the present inventors paid their attention to a point that the nonionic alkylene oxide resin easily absorbs moisture, and presumed that the moisture content of the resin often differs variously according to its handling environments (for example, environments of transportation, preservation and storage), and this might be the main factor of making the properties of the resin unstable. As a result of actual measurement, they confirmed that the moisture content of the nonionic alkylene oxide resin had such a great dispersion as cannot be overlooked, according to its handling environment, and that the physical properties (for example, melting point) of the resin remarkably dispersed depending on the moisture content.

Based on such knowledge, the present inventors have found and confirmed that when the nonionic alkylene oxide resin is manufactured by various polymerization methods, if the moisture content of the resin obtained by the polymerization is adjusted to a desired value within the above-mentioned range, and after that, in all the handling environments of the resin in and before the step of finally filling the resin into various containers as a product, the atmosphere is managed so that the moisture content of the resin will be a desired value within the above-mentioned range, then a resin product as a very useful polymer material in the above-mentioned various applications and other applications can be obtained.

That is to say, this process for manufacturing a nonionic alkylene oxide resin, involving the control of the moisture content, is a process comprising the steps of: obtaining a nonionic alkylene oxide resin of less than 7000 ppm in moisture content; and then filling the nonionic alkylene oxide resin, obtained in the preceding step, into a storage container; wherein: in a period extending from obtaining the nonionic alkylene oxide resin till filling it into the storage container, the atmosphere is managed so that the nonionic alkylene oxide resin will keep its moisture content being a desired moisture content of less than 7000 ppm, or water is added so that the moisture content of the nonionic alkylene oxide resin will be a desired moisture content of less than 7000 ppm.

This process preferably, in the above, further comprises a moisture-adjusting step for adjusting the moisture content of the nonionic alkylene oxide resin into the range of 50 ppm to less than 7000 ppm in a period extending from obtaining the nonionic alkylene oxide resin till filling it into the storage container.

This process can provide a nonionic alkylene oxide resin which can exhibit desired properties as a useful polymer material when used in prior publicly known various applications, above all, especially in the prescribed applications including color filter protective films, materials for resists, and separators, electrodes and polymer electrolytes for polymer batteries.

Hereinafter, with respect to the polymerization and the subsequent treatments in this process for manufacturing a nonionic alkylene oxide resin involving the control of the moisture content, there will also be made mention of matters concerned in polymerization methods other than the solution polymerization. Thereafter a description will be given about the control of the moisture content of the nonionic alkylene oxide resin.

### <Outline of from polymerization to finishing to product>:

In this process for manufacturing a nonionic alkylene oxide resin involving the control of the moisture content, though the polymerization method that can be adopted for obtaining the nonionic alkylene oxide resin by polymerization is not especially restricted, for example, a solution polymerization method, a precipitation polymerization method, and a bulk polymerization method can be cited. Among them, the solution polymerization method is preferable because of being excellent in productivity and the like, and particularly a solution polymerization in which polymerization is carried out while feeding a monomer component into a solvent charged in advance is preferable because of being excellent in safety, for example, being easy of removing the heat of reaction.

In the solution polymerization reaction, arranging that the moisture content of the nonionic alkylene oxide resin solution obtained by this polymerization, will be less than 7000 ppm is preferable in terms of easily controlling the moisture content of the nonionic alkylene oxide resin as the final product, and the above-mentioned moisture content is more preferably less than 200 ppm and still more preferably less than 50 ppm.

Also in cases of polymerization methods such as precipitation polymerization and bulk polymerization other than the solution polymerization, arranging that the moisture content of the nonionic alkylene oxide resin obtained by these polymerizations will be less than 7000 ppm is preferable in terms of easily controlling the moisture content of the nonionic alkylene oxide resin as the final product. The above-mentioned moisture content is more preferably less than 250 ppm and still more preferably less than 50 ppm. Incidentally, in cases such as of the precipitation polymerization, the above-mentioned moisture content is defined as meaning the moisture content of the resin separated from the solvent after the polymerization.

When in the above the moisture content of the resin or its solution after various polymerization steps is not less than 7000 ppm, there is an unfavorable possibility that the manufacturing cost may rise greatly in the case of obtaining a product of a law moisture content (particularly about 100 ppm).

Means for adjusting and controlling the moisture content of the resin or its solution after various polymerization steps as mentioned above include, for example, controlling the moisture content of the monomers (comonomers) and solvent to be used in the polymerization reaction and regulating the moisture adhering to the apparatus to be used for carrying out the polymerization reaction (e.g. reaction vessel, raw-material tank, piping, valves). In order to suppress the moisture content of the monomers (comonomers) and solvent to be used in the polymerization reaction to a lower one, for example, it is preferable to use them after subjecting them to the dehydration treatment by passing them through dehydration facilities before using them in the polymerization reaction.

Incidentally, the moisture contents described herein of the nonionic alkylene oxide resin solution and of the nonionic alkylene oxide resin (including also the resin after the devolatilization and further the palletized resin) are defined as being measured by the method described in the below-mentioned detailed description of examples of some preferred embodiments.

The steps following the above polymerization step include: a devolatilizing step; a step of adding such as stabilizing agent; cool-solidifying, molding, and classifying steps for finishing to a product; and a filling step; and these steps have already been described above. However, a description will be given in a little detail below about the cool-solidifying step and the molding step in cases where the nonionic alkylene oxide resin is obtained by polymerization methods other than the solution polymerization.

It has already been mentioned herein that because the nonionic alkylene oxide resin after the solution polymerization and the devolatilization is in the fluidized state and in a warm state, this resin is preferably cooled to thereby solidify it (hereinafter this step may be referred to as cool-solidifying step). However, also when the resin is obtained by other polymerization methods such as the precipitation polymerization and the bulk polymerization, it is usual that the resin is in the fluidized state and in a warm state, for example, because the resin is devolatilized and melted with such as a twin-screw kneader. Therefore, it is preferable to cool-solidify the resin. That is, when the nonionic alkylene oxide resin is obtained by the precipitation polymerization, there is a case where it is needed to cool-solidify the resin because, for the purpose such as of forming the resin into a desired shape, after the polymerization the resin as it is or as powdered is usually once heat-melted and handled. Also when, after the solution polymerization, the resin is reprecipitated with a poor solvent without carrying out the devolatilization, it is needed to cool-solidify the resin because the resin is usually once heat-melted and handled, similarly to the above-mentioned case of the precipitation polymerization. As to a case where the nonionic alkylene oxide resin is obtained by the bulk polymerization, the obtained resin is generally low in molecular weight and often obtained in a state having fluidity in some degree. Therefore, usually, after the polymerization, the resin is not powdered or treated otherwise but handled in a state filled in such as a container for transportation or storage that can keep the resin temperature after the polymerization or heat the resin. However, for the purpose such as of forming the resin into a desired shape, the resin is cool-solidified. Incidentally, when, even by the bulk polymerization, the resin is obtained in such a state as can be powdered, there is a case where the resin is usually once heat-melted and handled, similarly to the above-mentioned case where the resin is obtained by such as the precipitation polymerization. Therefore, it is still needed to cool-solidify the resin.

Also in this process for manufacturing a nonionic alkylene oxide resin involving the control of the moisture content, it is preferable that the nonionic alkylene oxide resin is molded in advance when the cool-solidifying step of cool-solidifying the nonionic alkylene oxide resin is carried out.

As the molding step, specifically, there can preferably be cited such as: (1) a step in which the nonionic alkylene oxide resin is molded into shapes such as of sheets, strings (strands), plates, and particles with such as an extruder in advance, and (2) a step in which the nonionic alkylene oxide resin is molded by casting it into such as a container to be a mold for shaping. However, the molding step is not especially limited to these. In the present invention, when the nonionic alkylene oxide resin is brought into contact with the cool-solidifying metal plate as it is, it is possible such that the resin is spread into a sheet shape at the same time as the contact. Therefore, such a method is also defined as being included in the molding step.

Among the above-mentioned specific examples of the molding step, in order to cool the resin efficiently and sufficiently in the subsequent cool-solidifying step, it is preferable to mold the resin into a sheet shape or plate shape by the molding step of the above-mentioned (1). Specifically, preferable methods include: a method in which while the above-mentioned resin is extracted from such as the devolatilizing apparatus with a polymer pump, a gear pump or the like connected to an outlet of the devolatilizing apparatus or a resin-discharging outlet of another apparatus such as a polymerization tank or a heat-melting tank, the above resin is extruded with an extruder further connected thereto; and a method in which a T die or a roll is used instead of the above-mentioned extruder.

Examples of the extruder include a single screw extruder, a twin-screw extruder (for example, product name: SUPERTEX αII), and an SCR self-cleaning type reactor (manufactured by Mitsubishi Heavy Industries, Ltd.). However, in order to extrude the resin into the sheet shape or plate shape of a definite thickness, it is preferable to extrude the resin through a T die provided to the extruder. In order to extrude the resin into the pellet shape (particulate shape), it is preferable to install a dropformer (product name: Roteform, manufactured by Sandvik Co., Ltd.).

The extruding thickness is preferably 0.1 to 50 mm, more preferably 1 to 5 mm, and still more preferably 1.5 to 2.5 mm, in consideration of such as the cooling efficiency in the cool-solidifying step and the size of the pellet shape in the case of making the resin into the pellet shape after the cool-solidifying step.

A detailed description about the pelletization has already been stated above.

### <Control of moisture content of nonionic alkylene oxide resin>:

In the manufacturing process of the present invention, the moisture content of the nonionic alkylene oxide resin is controlled by managing the atmosphere of the handling environment of the resin in a prescribed stage within a period extending from after the aforementioned polymerization step till the filling step. Moreover, the moisture content can be also controlled so that the moisture content will be in the prescribed range, specifically, the desired moisture content of less than 7000 ppm, preferably less than 5000 ppm, and more preferably less than 4000 ppm, by adjusting the moisture of the nonionic alkylene oxide resin (moisturizing and/or drying them) while making the above atmosphere management.

The above-mentioned atmosphere management and moisture adjustment will be described in the following.

### -Moisture-adjusting step by atmosphere management of nonionic alkylene oxide resin-

In the above-mentioned prescribed stage, that is, within a period extending from after the step of adjusting the moisture content of the resin after polymerization till the filling step, the atmosphere is managed so that the moisture content of the nonionic alkylene oxide resin will be in the above-mentioned prescribed range.

It is the most preferable for controlling the moisture content of the resin that the atmosphere management is carried out in all of the above-mentioned prescribed stages, specifically, in all including all steps being conducted in the above mentioned prescribed stages and the stages such as of conveyance between steps. However, the atmosphere management is not especially restricted thereto. For example, the atmosphere management may be carried out in at least a part (for example, at least one step, or only the conveyance stages between steps) of the above-mentioned prescribed stages.

The atmosphere management is carried out so that a desired value within the range (less than 7000 ppm) of the moisture content of the nonionic alkylene oxide resin which has been adjusted in the above-mentioned adjusting step will be retained until the end of the above-mentioned filling step. Incidentally, the retention referred to hereupon means arranging at least that the moisture content of the resin will be a specific value within the prescribed value range (less than 7000 ppm).

Preferable specific examples of the method for managing the atmosphere include a method in which: a substantially closed system is prepared by such as covering a desired area among such as various apparatuses, various devices, and resin-conveying routes with a highly airtight material, and the atmosphere within this system is controlled by feeding a gas having a dew point corresponding to a desired moisture content into the system.

By performing such a dew point management, it becomes easy to adjust the moisture content of the nonionic alkylene oxide resin to a desired amount of less than 7000 ppm.

The pressure of the gas to be fed into the system is preferably set more than an atmospheric pressure so as not to suck in air (especially, air containing a lot of moisture, and the like) from the outside of the system.

The device for feeding a gas into the system is not especially restricted. Its examples include: ventilator (fans) such as an axial-flow ventilator (a propeller fan), a multi-fan ventilator (a sirocco fan), a plate fan, a limit load fan, and a turbofan; blowers such as a turbo-blower, a rotary blower, a propeller blower, and a Roots blower; and compressors such as a reciprocating compressor, a turbo-compressor, and a propeller compressor.

Though the velocity at which the gas is fed into the system is not especially restricted, it is preferably 0.01 m/sec to 100 m/sec as linear velocity in the blowing direction in a plane contacting with the product. When the velocity is over 100 m/sec, there is an unfavorable possibility that: the pressure drop may be great, or the device cannot be operated because the nonionic alkylene oxide resin is entrained in the gas. When less than 0.01 m/sec, there is an unfavorable possibility that it may take too long time to reach a definite amount of moisture.

In order not to stagnate the fed gas in the system, for example, it is preferable that a part where the linear velocity is expected to be particularly slower than surroundings in the substantially closed system is provided with a small vent to let the gas go off through it.

### -Moisture-adjusting step by drying and moisturizing of nonionic alkylene oxide resin-

In the present invention, it is permitted that in the above-mentioned prescribed stage, the atmosphere is managed and, if necessary, separately therefrom, there is provided a moisture-adjusting step in which the moisture content of the resin is controlled to a prescribed value. In a point that the moisture content of the resin as the final product can almost accurately and efficiently be controlled, it is preferable to conduct the atmosphere management and the moisture-adjusting step together. The moisture adjustment hereupon means that the nonionic alkylene oxide resin in the above-mentioned prescribed stage is positively moisturized and/or dried, whereby the resin is treated so as to intentionally have a desired moisture content.

The moisture-adjusting step is not especially restricted as to in which stage of the above-mentioned prescribed stages it is to be conducted. Also, its number of steps may be either one or plural and is therefore not especially restricted. However, for example, if just before the filling step the moisture is adjusted so as to give a desired moisture content, then the moisture content of the resin as the final product can be properly controlled and the dispersion in the quality can also be restrained. In addition, if the change by the atmosphere management is foreseen and the moisture is adjusted just after the above-mentioned adjusting step such as the devolatilizing step, then it may be preferable in economical efficiency and productivity to a case where the moisture is adjusted in the final stage such as just before the filling step.

Though the method of moisture adjustment by moisturization is not especially restricted, such as a method of spraying water can be cited.

Specific examples of the method of spraying water include a method in which: the nonionic alkylene oxide resin is put into a device such as a Nauta mixer or a conical drier and then sprayed with water while being stirred. Such as the amount of water sprayed, the time of spraying, the temperature within the device when spraying, the temperature of water itself, and the stirring rotation speed of the device may be properly set according to the desired moisture content.

Though the method of moisture adjustment by drying is not especially restricted, for example, there can be cited (1) a method of drying by passing a dried gas (air, nitrogen, argon, helium, or the like) through the resin under reduced pressure, (2) a method in which after the nonionic alkylene oxide resin is put into a silo, compressed air is allowed to blow the top and bottom of the resin and circulate to thus dry the resin, (3) a method in which after the nonionic alkylene oxide resin is put into a Nauta mixer or a conical dryer, compressed air is passed through the resin to dry it, and (4) a method in which after the nonionic alkylene oxide resin is put into a through-flow rotary dryer (for example, a rotary kiln, and the like), compressed air is passed through the resin to dry it. In these methods, the drying temperature (air temperature), the drying time, and the like may be properly set according to the desired moisture content.

In the present invention, only in the specific cases such as where surrounding air is very dry and the moisture content aimed at is high (for example, 4000 ppm), the necessity for managing the atmosphere may be scarce. In such cases, it is possible to do only the moisture-adjusting step without managing the atmosphere.

### <Demonstration of control of moisture content>:

Hereinafter, demonstrational examples of the control of the moisture content in the process for manufacturing a nonionic alkylene oxide resin will be shown. However, the method for controlling the moisture content is not limited to these in any way.

Measurement of moisture content of solvent: The measurement was carried out with a Karl Fischer moisture content meter (coulometric titration method, AQ-7 manufactured by Hiranuma Sangyo Co., Ltd.).

Measurements of weight average molecular weight (Mw) and limiting viscosity: The measurements were carried out with a GPC instrument the calibration curve of which had been drawn using standard molecular weight samples of polyethylene oxide. A reaction mixture (containing a polymer) obtained after a reaction was dissolved into a prescribed solvent and then measured. In addition, the limiting viscosity was measured with an Ostwald viscometer.

### [Demonstrational Examples 1 to 15 and Comparative Demonstrational Example 1]:

These examples are examples in which the moisture contents of polymers are adjusted under an atmosphere of a gas having a prescribed dew point.

A container of 1 L was packed with 0.43 kg of polymer, and a gas adjusted to the prescribed dew point was allowed to flow through at a rate of 1 L/min, and about 0.5 g of polymer was sampled every 5 hours to measure the moisture content of the polymer, whereby the variation of the moisture content of the polymer with the passage of time was examined. The moisture content which had become unchanged and the time which had passed until then were compiled in Table 1. Physical properties of polymers used in these Demonstrational Examples and Comparative Demonstrational Example, and documents referred to for the preparation of the polymers, are shown in Table 2.

**Table 1**

| | | Experimental conditions | | | | Experimental results | | |
|---|---|---|---|---|---|---|---|---|
| No. | Demonstrational Example No. | Polymer name * 1 | Dew point of gas | Kind of gas | Shape of polymer *2 | Moisture content of resin at start of through-flowing of gas of prescribed dew point | Moisture content at the time it became unchanged | Time having passed until the moisture content became unchanged |
| | | | (°C) | | | (ppm) | (ppm) | (hours) |
| 1 | 1 | A | +3 | Air | Pellet | 137 | 5,050 | 60 |
| 2 | 2 | B | +3 | Air | Pellet | 152 | 5,040 | 60 |
| 3 | 3 | A | 0 | Air | Pellet | 137 | 3,350 | 50 |
| 4 | 4 | B | 0 | Air | Pellet | 152 | 4,420 | 55 |
| 5 | 5 | A | -5 | Air | Pellet | 96 | 3,440 | 20 |
| 6 | 6 | A | -5 | Air | Crushed product | 133 | 3,070 | 10 |
| 7 | 7 | B | -5 | Nitrogen | Pellet | 221 | 2,970 | 10 |
| 8 | 8 | B | -5 | Nitrogen | Crushed product | 150 | 3,390 | 30 |
| 9 | 9 | C | -5 | Air | Powder | 75 | 2,960 | 25 |
| 10 | 10 | D | -5 | Air | Powder | 82 | 3,040 | 25 |
| 11 | 11 | E | -5 | Air | Powder | 68 | 3,010 | 30 |
| 12 | 12 | A | -11 | Nitrogen + Air | Pellet | 1,210 | 2,010 | 50 |
| 13 | 13 | B | -60 | Nitrogen | Pellet | 6,410 | 101 | 25 |
| 14 | 14 | B | -60 | Nitrogen | Crushed product | 10,150 | 143 | 15 |
| 15 | 15 | B | -70 | Nitrogen | Pellet | 3,090 | 130 | 25 |
| 16 | Comparative Demonstrational Example 1 | A | +16 | Air | Pellet | 117 | 2,500 | 35 |

| | | | | | | | | |
|---|---|---|---|---|---|---|---|---|
| * 1: Physical properties of polymers and documents referred to for the preparation of the polymers are shown in Table 2. *2: Shape of pellet: 2 mm x 3.5 mm × 4 mm, shape of crushed product: particle of about 1 to about 2 mm. | | | | | | | | |

**Table 2**

| Polymer name | Weight average molecular weight | Limiting viscosity | Monomer composition (mole %) | | | Polymerization method referred to |
|---|---|---|---|---|---|---|
| | | | Ethylene oxide | Butylene oxide | Allyl glycidyl ether | |
| A | 120000 | ― | 94 | 6 | 0 | JP-A-2003-277496 |
| B | 100000 | ― | 95 | 4 | 1 | JP-A-2003-277496 |
| C | ― | 20 | 10 | 0 | 0 | JP-A-05-017566 |
| D | ― | ― | 10 | 0 | 0 | JP-A-05-310908 |
| E | ― | ― | 10 | 0 | 0 | WO 03/040210 |

### [Demonstrational Example 16]:

This example is an example in which the moisture content is adjusted by drying a polymer.

A pellet-shaped polymer was dried using a dryer shown in Table 3 and under drying conditions shown in Table 4. Polymer samples were taken at the start of the experiment, after 3.2 hours, after 6 hours, and after 8 hours to measure the moisture content of the polymer, whereby the variation of the moisture content of the polymer with the passage of time was examined. Its results are shown in Table 5.

**Table 3**

| Apparatus name | Nauta mixer |
|---|---|
| Mixing volume | 100 L |
| Material of apparatus | SUS316 |

**Table 4**

| | |
|---|---|
| Amount of pellets charged | 52.0 kg |
| Degree of vacuum | 10 Torr |
| Amount of N₂ flowing into apparatus | 3.3 NL/min |
| Spin revolution rate | 90 rpm |
| Orbital revolution rate | 1.1 rpm |
| Temperature | Ordinary temperature |

| | |
|---|---|
| The dew point of nitrogen used is -50°C The experiment was carried out with water of ordinary temperature sealed in a jacket. | |

**Table 5**

| Drying time | Hr | 0 | 3.2 | 6.0 | 8.0 |
|---|---|---|---|---|---|
| Moisture content value of pellets | ppm | 3707 | 1229 | 389 | 228 |

### [Demonstrational Example 17]:

This example is an example in which the moisture content of a polymer is adjusted by adding water directly to the polymer.

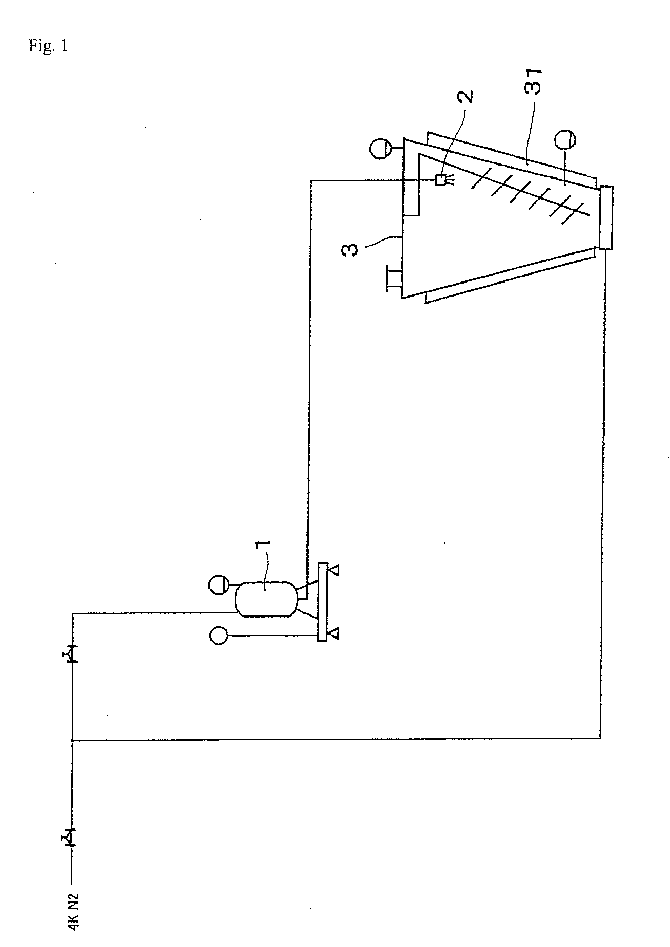

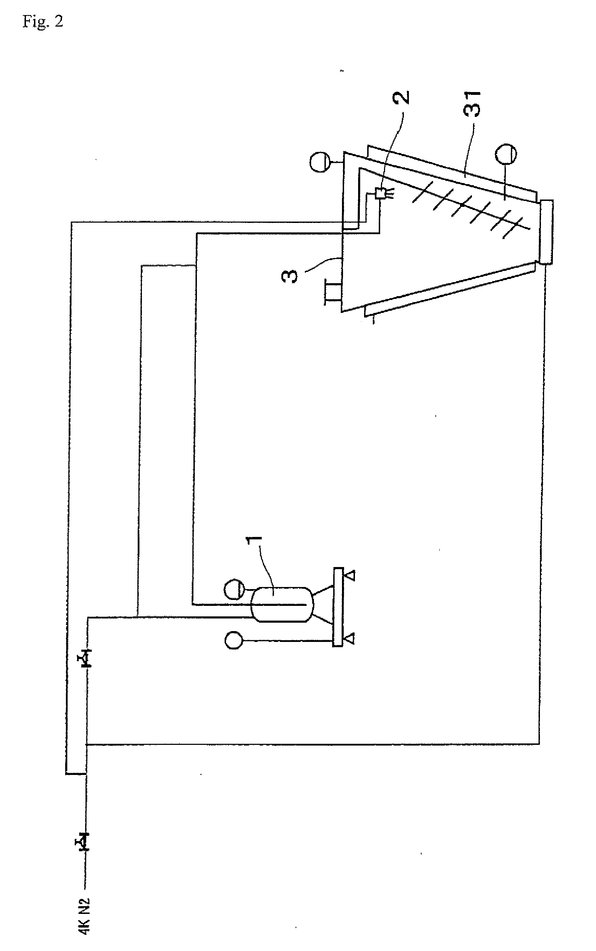

Moisture-adjusting experiments were carried out with experimental apparatuses shown in Figs. 1 and 2. Both apparatuses are equipped with a Nauta mixer 3 (mixing volume: 100 L) having a spray nozzle 2 connected to a pot 1 of moisture-adjusting water. A driving gas for the spray nozzle 2 is nitrogen (N₂) gas of-50°C in dew point. Pressure in the Nauta mixer 3 is ordinary pressure and water of ordinary temperature is passed through a jacket 31. The nozzle 2 of the apparatus of Fig. 1 is a nozzle for one fluid and the nozzle 2 of the apparatus of Fig. 2 is a nozzle for two fluids. Into the Nauta mixer 3 of each apparatus, 52.0 kg of pellet-shaped polymer was placed, and water was sprayed to the pellet-shaped polymer from the spray nozzle 2. The spraying conditions are shown in Table 6. After the end of the spraying, stirring was carried out for two hours under conditions of 90 rpm in spin revolution rate and 4.3 rpm in orbital revolution rate. After that, 10.0 kg of pellet-shaped polymer was extracted from the bottom of each Nauta mixer 3, and 20 g each of samples were taken from 3 places of the extracted polymer and then put into their respective aluminum-laminated bags having been purged with N₂. The moisture content of the polymer in each bag was measured to obtain moisture adjustment results shown in Table 7.

**Table 6**

| Experiment No. | 1 | 2 | 3 | 4 |
|---|---|---|---|---|
| Type of spray nozzle | Nozzle for two fluids | Nozzle for two fluids | Nozzle for one fluid | Nozzle for one fluid |
| Pressure of N₂ sprayed | 1 K/G | 1 K/G | - | - |
| Flow rate of N₂ sprayed | 1.5 m³/Hr | 1.5 m³/Hr | - | - |
| Pressure of water sprayed | 0.5 K/G | 0.5 K/G | 4 K/G | 4 K/G |
| Amount sprayed | 185 g | 175 g | 156 g | 160 g |

**Table 7**

| Experiment No. | 1 | 2 | 3 | 4 |
|---|---|---|---|---|
| Moisture content before moisture adjustment | 207 | 242 | 215 | 273 |
| First-time 10kg-extracted sample 1 | 3421 | 3013 | 3112 2 | 3123 |
| First-time 10kg-extracted sample 2 | 3344 | 3155 | 3088 | 3148 |
| First-time 10kg-extracted sample 3 | 3377 | 3091 | 3113 | 3030 |
| Second-time 10kg-extracted sample | 3506 | 3032 | 3137 | 3049 |
| Second-time 10kg-extracted sample 2 | 3415 | 3036 | 3172 | 3072 |
| Second-time 10kg-extracted sample 3 | 3286 | 3052 | 3122 | 2982 |
| Third-time 10kg-extracted sample 1 | 3457 | 3011 | 3125 | 2923 |
| Third-time 10kg-extracted sample 2 | 3416 | 3065 | 3069 | 2953 |
| Third-time 10kg-extracted sample 3 | 3416 | 3095 | 3114 | 3186 |
| Fourth-time 10kg-extracted sample 1 | 3514 | 2936 | 3255 | 3166 |
| Fourth-time 10kg-extracted sample 2 | 3333 | 3029 | 3102 | 3125 |
| Fourth-time 10kg-extracted sample 3 | 3409 | 3002 | 3131 | 3022 |
| Fifth-time 10kg-extracted sample 1 | 3422 | 3093 | 3032 | 3138 |
| Fifth-time 10kg-extracted sample 2 | 3414 | 3101 | 3071 | 2994 |
| Fifth-time 10kg-extracted sample 3 | 3393 | 3230 | 3201 | 3092 |
| Average value of moisture contents after moisture adjustment | 3408 | 3063 | 3123 | 3067 |
| Moisture content 3 σ after moisture adjustment | 179 | 210 | 165 | 244 |

| | | | | |
|---|---|---|---|---|
| The unit in the Table is ppm. | | | | |

The nonionic alkylene oxide resin obtained by the manufacturing process of the present invention involving the control of the moisture content can exhibit desired properties as a useful polymer material when used for such as color filter protective films, materials for resists, and separators, electrodes and polymer electrolytes for polymer batteries.

### <Nonionic alkylene oxide resin obtained and its applications>:

The pellet-shaped nonionic alkylene oxide resin obtained by the manufacturing process of the present invention is preferably less than 7000 ppm, more preferably less than 5000 ppm, and still more preferably less than 4000 ppm, in moisture content. The moisture content referred to hereupon means a value in the nonionic alkylene oxide resin in the final product stage, specifically, in the resin at the end of the above-mentioned filling step (at the completion of the filling) and does not need to be attained in part or all of the manufacturing steps in the process of the present invention. When the above-mentioned moisture content is 7000 ppm or more, because the dielectric constant of the resin increases beyond necessity, there is, for example, an unfavorable possibility that when the resin is used in applications such as protective film of color filter, the resin may substantially have electric conductivity to cause a functional deterioration fatal as the above-mentioned protective film. In addition, because the moisture reacts with such as metal ions to generate hydroxides and the like, there is, for example, an unfavorable possibility that when the resin is used in applications such as electrolyte layer of polymer battery, an insulating layer may be formed in an interface between the metal and the electrolyte layer, so that the electric potential decreases and also the voltage under a constant current continues to rise to thus deteriorate the cycling characteristics of the battery. Moreover, when the resin is used for pressure sensitive adhesive tapes for semiconductors, there is an unfavorable possibility that the malfunction may be caused by the moisture. When the resin is used for urethane foams, because the moisture reacts with an isocyanate group and the desired reaction does not progress enough, there is an unfavorable possibility that the physical properties may be deteriorated or foaming may be caused.

Though there is no especial restriction, the nonionic alkylene oxide resin obtained by the process of the present invention can be preferably used as a useful polymer material in a wide range of applications, for example, polyurethane resins for such as adhesives, paints, sealants, elastomers, and flooring, and besides, hard, soft or semihard polyurethane resins, and further, surfactants, sanitary products, deinking agents, lubricating oil, operating oil, and separators, electrodes and polymer electrolyte layers used for polymer batteries; and color filter protective films; photosensitive resins used for such as resists and flexographic printing plate materials, pressure sensitive adhesive tapes for semiconductors; and urethane foams.

### DETAILED DESCRIPTION OF THE PREFERRED EMBODIMENTS

Hereinafter, the present invention is more specifically illustrated by the following Examples of some preferred embodiments. However, the present invention is not limited to these in any way.

Hereinafter, the present invention is specifically illustrated. However, the present invention is not limited to these Examples of some preferred embodiments. Incidentally, hereinafter, for convenience, the units "weight part(s)", "hour(s)" and "liter(s)" may be referred to simply as "part(s)", "h" and "L" respectively. In addition, "weight" may be referred to as "wt" (for example, "weight %" may be referred to as "wt %", and "weight/weight" may be referred to as "wt/wt").

The conditions of dehydration treatment and various measurements in the Examples and Comparative Examples will be shown below.

Dehydration treatment with molecular sieves: A molecular sieve was added to solvents (toluene and the like) and various monomers to be dehydrated and dried in an amount of 10 wt % relative thereto, and then they were deaerated with nitrogen. Incidentally, the molecular sieve used is product name: Molecular Sieve (Type: 4A 1.6), manufactured by Union Showa Corp.

Measurements of weight average molecular weight (Mw) and molecular weight distribution (Mw/Mn): The measurements were carried out with a GPC instrument the calibration curve of which had been drawn using standard molecular weight samples of polyethylene oxide. A reaction mixture (containing a polymer) obtained after a polymerization reaction was dissolved into a prescribed solvent and then measured.

Calorimetry (measurement of melting point): Using a differential calorimeter, the melting point of a polymer was measured in the following temperature pattern. The polymer to be used as the sample was prepared as follows. A reaction mixture (containing a polymer) obtained after a polymerization reaction was dried with a vacuum dryer at 80°C for 2 hours whereby volatile components in the reaction mixture were removed, and then the obtained polymer was subjected to moisture adjustment under a dry nitrogen flow for 10 hours or more.

Within an analytical instrument (product name: Calorimeter "DSC220", manufactured by Seiko Electronic Industries Corp.), the polymer was once melted by rapid heating to 80°C and then crystallized by cooling at a cooling speed of-5°C/min. from 80°C to -100°C, and thereafter, when the temperature of the crystallized polymer was raised at a temperature rising speed of 5°C/min. from -100°C to 80°C, the temperature at which the crystallized polymer had completely melted was determined as the melting point (Tm (°C)) of the polymer.

Measurement of amount of residual solvent in resin after devolatilization: The amount (wt %) of the residual solvent in a specimen sample is measured with a high-speed liquid chromatography (column: ODS-3 (manufactured by GL Science Corp.), column temperature: 40°C, flow rate: 1.0 mL/min., injection rate: 5 µL, UV detector: 210 nm, eluent: mixed liquid of "acetonitrile/0.1 wt % aqueous phosphoric acid solution" (volume ratio: acetonitrile/0.1 wt % aqueous phosphoric acid solution = 85/15)). The specimen sample to be used is prepared in a way that a devolatilized resin, which is to be measured, is diluted with the above-mentioned eluent so as to be 1.0 wt % in solid content. As to the specific measuring method, first a calibration curve is drawn using samples for calibration curve concerning the prescribed solvent (for example, toluene), and after that, the above-mentioned specimen sample is measured to determine the amount of the residual solvent using the calibration curve.

Measurement of moisture content of resin after devolatilization: The following (1) to (4), that is, (1) a sample that has been taken from a devolatilized ethylene oxide resin under a dry atmosphere when being hot (in a fluidized state retaining a resin temperature near the devolatilizing temperature) and then left cooling naturally, (2) toluene as a solvent (its moisture content has been decreased with molecular sieves (product name: Molecular Sieve 3A1.6 or Molecular Sieve 4A1.6, manufactured by Union Showa Corp.) as much as possible beforehand), (3) a glass container, and (4) an injector are put into a glove box and dried for two hours or more. After drying, 2g of ethylene oxide resin and 18 g of toluene are put into the glass container and dissolved enough with a magnetic stirrer to make a resin solution, and then all the resin solution is taken with the injector. At the same time, 18 g of toluene only is taken with another injector. Thereafter, each injector is taken out from the glove box, and using AQUACOUNTER Q-7 (a moisture content meter manufactured by HIRANUMA Corp.), the moisture content of each of the resin solution and toluene only is measured. From the values (ppm) of the moisture contents obtained by this measurement, the weight (mg) of the moisture contained in each of the resin solution and toluene only is calculated, and from the difference between these values, the weight (mg) of the moisture contained in the nonionic alkylene oxide resin is determined. Thus, the weight (mg) of the moisture that is this difference is divided by the weight (2 g) of the initially dissolved nonionic alkylene oxide resin to calculate the moisture content (ppm) of the nonionic alkylene oxide resin.

### [Synthesis Example 1]:

After a 100 L reactor equipped with a max blending blade (manufactured by Sumitomo Heavy Machine Industries, Ltd.) and an addition inlet was washed with a solvent (toluene), the reactor was heat-dried and then deaerated with nitrogen. Into this reactor, 207.2 parts of toluene, which had been subjected to dehydration treatment with the molecular sieve, and 0.40 parts of t-butoxypotassium (20 wt% tetrahydrofuran solution) as a reaction initiator were placed in sequence. After that, the inside of the reactor was deaerated with nitrogen and pressurized with nitrogen to 0.3 MPa, and then the temperature was raised while stirring the mixture with the max blending blade.

After confirming that the temperature in the inside of the reactor became 90°C, supplies of ethylene oxide and a monomer mixture comprising butylene oxide and allyl glycidyl ether (butylene oxide/allyl glycidyl ether = 18 parts/5.7 parts, both of which had been subjected to dehydration treatment with the molecular sieve) were started. As to ethylene oxide, its supply was started at a supply rate of 51.8 parts/h, and after 15 minutes therefrom, the supply of the above monomer mixture comprising butylene oxide and allyl glycidyl ether was started at a supply rate of 2.37 parts/h and continued at this constant rate for 2.25 hours. Since after 2.5 hours from the start of the supply of ethylene oxide, ethylene oxide and the monomer mixture were further supplied for 5 hours at constant supply rates of 12.1 parts/h as to ethylene oxide and 2.37 parts/h as to the monomer mixture (amount of ethylene oxide supplied: total 190 parts, amount of monomer mixture supplied: total 17.2 parts). During the supplies, the reaction was conducted at 100°C ± 5°C while monitoring and controlling a rise of the inside temperature and a rise of the inside pressure caused by heat of polymerization.

After the end of the supplies, the reactor was further maintained at 90°C or more for 5 hours to thus conduct the aging.

By the above-mentioned operation, a polymerization reaction liquid containing a nonionic alkylene oxide resin (ethylene oxide resin) having a weight average molecular weight Mw of 107,000, a molecular weight distribution (Mw/Mn) of 1.65, and a melting point of 48°C was obtained.

### [Synthesis Example 2]:

After a 100 L reactor equipped with a max blending blade (manufactured by Sumitomo Heavy Machine Industries, Ltd.) and an addition inlet was washed with a solvent (toluene), the reactor was heat-dried and then deaerated with nitrogen. Into this reactor, 286.5 parts of toluene, which had been subjected to dehydration treatment with the molecular sieve, and 0.6 parts of t-butoxypotassium (20 wt% tetrahydrofuran solution) as a reaction initiator were placed in sequence. After that, the inside of the reactor was deaerated with nitrogen and pressurized with nitrogen to 0.3 MPa, and then the temperature was raised while stirring the mixture with the max blending blade.

After confirming that the temperature in the inside of the reactor became 90°C, a supply of ethylene oxide was started at a supply rate of 51 parts/h and continued at this constant rate for 2 hours. Since after 15 minutes from the start of the supply of ethylene oxide, butylene oxide which had been subjected to dehydration treatment with the molecular sieve was supplied at a constant supply rate of 9 parts/h for 1.75 hours. Since after 2 hours from the start of the supply of ethylene oxide, ethylene oxide was further supplied at a constant supply rate of 24.9 parts/h for 6 hours and butylene oxide was further supplied at a constant supply rate of 6.5 parts/h for 3 hours (amount of ethylene oxide supplied: total 251.5 parts, amount of butylene oxide supplied: total 35 parts). During the supplies, the reaction was conducted at 100°C ± 5°C while monitoring and controlling a rise of the inside temperature and a rise of the inside pressure caused by heat of polymerization.

After the end of the supplies, the reactor was further maintained at 90°C or more for 5 hours to thus conduct the aging.

By the above-mentioned operation, a polymerization reaction liquid containing a nonionic alkylene oxide resin (ethylene oxide resin) having a weight average molecular weight Mw of 117,000, a molecular weight distribution (Mw/Mn) of 1.4, and a melting point of 48°C was obtained.

### [Example 1]:

The polymerization reaction liquid, which had been obtained by the solution polymerization in Synthesis Example 1 and in which the weight ratio of the nonionic alkylene oxide water-soluble resin to toluene was 50 weight %/50 weight %, was supplied to a thin-film evaporator (product name: EXEVA, manufactured by Shinko Pantec Co., Ltd.) (jacket temperature: 180°C, reduced pressure level: 6665 Pa) and concentrated by devolatilization, and then extruded at a temperature of 145°C and at a discharge rate of 15 kg/h from a T die (sheet die) (width: 150 mm, clearance: 2.3 mm) equipped to the above-mentioned thin-film evaporator, thus obtaining a sheet-shaped nonionic alkylene oxide water-soluble resin of 0.16 weight % in toluene content. At this stage, the moisture content of the nonionic alkylene oxide water-soluble resin was 60 ppm.

The discharged sheet-shaped nonionic alkylene oxide water-soluble resin was provided onto the upper surface of a lower belt of a double belt cooler (product name: Double Belt Cooler, manufactured by Sandvik Co., Ltd.), when the double belt cooler was operated under conditions of a speed of 0.85 to 0.90 m/min., a cooling-water temperature of 23.3°C, a space between the upper and lower belts of 2.0 mm, and a water pressure of 0.20 MPa.

The sheet of the nonionic alkylene oxide water-soluble resin (1) that had been cooled to 25°C or less by the double belt cooler was provided to a sheet pelletizer (product name: SG(E)-220, manufactured by Horai Co., Ltd.), when the sheet pelletizer was operated at a frequency of a motor for a longitudinal cutting blade of 8 to 9 Hz, a drawing speed of 0.88 to 0.99 m/min., and a frequency of a motor for a transverse cutting blade of 13 to 15 Hz, and the transverse cutting blade part was exposed to cold air (16 to 17°C) from a spot cooler.

Rectangular pellets of the nonionic alkylene oxide water-soluble resin obtained in this way were 1.7 to 2.4 mm x 4.0 mm x 2.5 to 3.0 mm in size and 0.16 weight % in toluene content. The moisture content of the obtained rectangular pellets was 4120 ppm.

### [Example 2]:

The polymerization reaction liquid, which had been obtained by the solution polymerization in Synthesis Example 1 and in which the weight ratio of the nonionic alkylene oxide water-soluble resin to toluene was 50 weight %/50 weight %, was supplied to a thin-film evaporator (product name: EXEVA, manufactured by Shinko Pantec Co., Ltd.) (jacket temperature: 180°C, reduced pressure level: 6665 Pa) and concentrated by devolatilization, and the devolatilized nonionic alkylene oxide water-soluble resin of 0.45 weight % in toluene content was extruded at 35 kg/h from a T die (width: 700 mm, clearance: 2.0 to 2.5 mm) through a gear pump. The extruded sheet-shaped nonionic alkylene oxide water-soluble resin was provided onto the upper surface of a cooling drum of a drum cooler (product name: Drum Cooler DC, manufactured by Mitsubishi Chemical Engineering Co., Ltd.), when the drum cooler was operated at a drum revolution rate of 0.3 to 0.4 rpm, a speed of 25 to 34 m/h, and a cooling-water temperature of 5 to 10°C.

The sheet of the nonionic alkylene oxide water-soluble resin that had been cooled to 20°C or less by the drum cooler was provided to a sheet pelletizer (product name: SG(E)-220, manufactured by Horai Co., Ltd.), when the sheet pelletizer was operated at a frequency of a motor for a longitudinal cutting blade of 3.6 to 5.5 Hz, a drawing speed of 0.4 to 0.6 m/min., and a frequency of a motor for a transverse cutting blade of 7.0 to 12.0 Hz, and the transverse cutting blade part was exposed to cold air (corresponding to a dew point of-60°C) from a spot cooler.

Rectangular pellets of the nonionic alkylene oxide water-soluble resin obtained in this way were 2.0 mm x 4.0 mm x 3.5 mm in average size and 0.45 weight % in toluene content. The moisture content of the obtained rectangular pellets was 900 ppm.

### [Example 3]:

The same operations as those in Example 2 were conducted, except that the polymerization reaction liquid of Synthesis Example 2 was used in place of the polymerization reaction liquid of Synthesis Example 1 used in Example 2 and that a cover made of tinplate was placed so as to cover all parts extending from a resin-discharging outlet of the T die (sheet die) to the drum cooler (product name: Drum Cooler DC, manufactured by Mitsubishi Chemical Engineering Co., Ltd.) and its sheet outlet to thereby make a water absorption-preventing treatment.

Incidentally, one or two holes of about 1.8 cm in inside diameter (about 15 cm interval) were made at intervals of about 9 cm in the above-mentioned cover made of tinplate, and dry air was allowed to flow in from the holes.

In addition, the dry air was generated using generators such as OILFREE SCROLL COMPRESSOR (manufactured by ANEST IWATANI CORP.) and AIR DRYER RAX series (manufactured by ORION MACHINERY CORP.). Specifically, the dry air was generated at 1 Nm³/min., and through the cover made of tinplate, the dry air was allowed to flow at a flow rate of 0.5 to 0.6 m/sec in opening parts on the above-mentioned resin-discharging outlet side and on the sheet outlet side and at a flow rate of 0.3 to 0.5 m/sec in the inner part of the sides (range extending from the above-mentioned resin-discharging outlet to the sheet outlet) of the cover made of tinplate, thereby conditioning the outside air not to flow back into the cover. Moreover, under such conditions, dry air controlled to -60°C in dew point was allowed to flow, so that the dew point of air in the cover made of tinplate was -60°C to -59°C. Incidentally, the dew point was measured with a ceramic moisture sensor manufactured by Nagano Denki Sangyo Co., ltd.

The moisture content of the rectangular pellets of the nonionic alkylene oxide water-soluble resin, which was obtained making the water absorption-preventing treatment as described above, was 128 ppm.

### [Example 4]:

This is an example of recycling the solvent (toluene) in the process of obtaining a nonionic alkylene oxide resin.

### (1) First-time polymerization, devolatilization, and distillation:

The same polymerization as in Synthesis Example 1 was conducted.

The obtained polymerization reaction liquid was placed into a raw-material tank that had been heated in advance by a heating medium of steam of 50 to 100°C. From this raw-material tank, the polymerization reaction liquid was supplied to a thin-film evaporator (product name: EXEVA, manufactured by Shinko Pantec Co., Ltd.) at a supply speed of 46 kg/h using a gear pump and concentrated by devolatilization. The operational conditions of the thin-film evaporator were set as follows: the revolution rate of a motor for a stirring blade was 300 rpm, the revolution rate of a discharging screw was 90 to 100 rpm, the jacket temperature was 180°C, and the pressure was 50 Torr (6,666 Pa). The resin temperature at an outlet of the thin-film evaporator was 178°C.

In the nonionic alkylene oxide resin obtained after the devolatilization, the weight ratio of the ethylene oxide resin to toluene (resin/toluene) was 99.79 weight %/0.21 weight % and the moisture content was 35 ppm.

As for the solvent recovered by the above-mentioned volatilization treatment (toluene flown out of the thin-film evaporator), atmospheric distillation was performed in a distillation column of 10 in number of theoretical plates under main distillation conditions of bottom temperature = 112°C, top temperature = 112°C, and reflux ratio = 0.5, so that a first-time distilled toluene was obtained.

### (2) Second-time polymerization, devolatilization, and distillation:

Using the above-mentioned first-time distilled toluene, polymerization equivalent to Synthesis Example 1 was performed 9 times in a one-liter autoclave. After polymerization, toluene was distilled off by heating and depressurizing the autoclave as it contained toluene (conditions: bath 150°C, reduced pressure level 760 → 200 torr). After that, using an Alder-Show distillation apparatus (10 plates), atmospheric distillation was performed under main distillation conditions of bottom temperature = 112°C, top temperature = 112°C, and reflux ratio = 0.5, so that a second-time distilled toluene was obtained.

### (3) Third-time polymerization, devolatilization, and distillation:

Using the above-mentioned second-time distilled toluene, polymerization equivalent to Synthesis Example 1 was performed 6 times in a one-liter autoclave. After polymerization, toluene was distilled off by heating and depressurizing the autoclave as it contained toluene (conditions: bath 150°C, reduced pressure level 760 → 200 torr). After that, using an Alder-Show distillation apparatus (10 plates), atmospheric distillation was performed under main distillation conditions of bottom temperature = 112°C, top temperature = 112°C, and reflux ratio = 0.5, so that a third-time distilled toluene was obtained.

### (4) Fourth-time polymerization, devolatilization, and distillation:

Using the above-mentioned third-time distilled toluene, polymerization equivalent to Synthesis Example 1 was performed 4 times in a one-liter autoclave. After polymerization, toluene was distilled off by heating and depressurizing the autoclave as it contained toluene (conditions: bath 150°C, reduced pressure level 760 → 200 torr). After that, using an Alder-Show distillation apparatus (10 plates), atmospheric distillation was performed under main distillation conditions of bottom temperature = 112°C, top temperature = 112°C, and reflux ratio = 0.5, so that a fourth-time distilled toluene was obtained.

### (5) Fifth-time polymerization, devolatilization, and distillation:

Using the above-mentioned fourth-time distilled toluene, polymerization equivalent to Synthesis Example 1 was performed 2 times in a one-liter autoclave.

Physical properties of the nonionic alkylene oxide resin obtained by each-time polymerization are shown in Table 8.

**Table 8**

| Number of times of experiments | Mw | Mw/Mn | Melting point |
|---|---|---|---|
| | | | (°C) |
| 1 | 107,000 | 1.65 | 48 |
| 2 | 107,000 | 1.65 | 47 |
| 3 | 108,000 | 1.66 | 48 |
| 4 | 106,000 | 1.65 | 48 |
| 5 | 107,000 | 1.64 | 48 |

From Table 8, it has been found that there is no problem in the polymerization by the use of a recycled solvent. Moreover, it has been also found that the number of times of the recycling has no influence on the polymerization.

Using the nonionic alkylene oxide resin obtained at each time, its pellets were obtained in the same way as of Example 1.

### [Example 5]:

This is a recycling example of the pellet-shaped nonionic alkylene oxide resin.

The polymerization reaction liquid, which had been obtained by the solution polymerization in Synthesis Example 1 and in which the weight ratio of the nonionic alkylene oxide water-soluble resin to toluene was 50 weight %/50 weight %, was supplied to a thin-film evaporator (product name: EXEVA, manufactured by Shinko Pantec Co., Ltd.) (jacket temperature: 180°C, reduced pressure level: 6665 Pa) and concentrated by devolatilization, and the devolatilized nonionic alkylene oxide water-soluble resin of 0.4 weight % in toluene content was transferred to a KRC kneader (product name: S2KRC Kneader, manufactured by Kurimoto, Ltd.) at a temperature of 175°C and a transfer speed of 31 kg/h through a gear pump. Incidentally, in this step, at the same time, pellets that had been obtained in such a way as described below in this Example 5 were transferred to the KRC kneader at 4 kg/h.

In this step, the KRC kneader was operated at a heating temperature of 180°C and a paddle revolution rate of 114 rpm.

From the discharging outlet of the KRC kneader, the nonionic alkylene oxide water-soluble resin which had been kneaded with a stabilizing agent was extruded at 35 kg/h from a T die (width: 700 mm, clearance: 2.0 to 2.5 mm) through a gear pump. The extruded sheet-shaped nonionic alkylene oxide water-soluble resin was provided onto the upper surface of a cooling drum of a drum cooler (product name: Drum Cooler DC, manufactured by Mitsubishi Chemical Engineering Co., Ltd.), when the drum cooler was operated at a drum revolution rate of 0.3 to 0.4 rpm, a speed of 25 to 34 m/h, and a cooling-water temperature of 5 to 10°C.

The sheet of the nonionic alkylene oxide water-soluble resin that had been cooled to 20°C or less by the drum cooler was provided to a sheet pelletizer (product name: SG(E)-220, manufactured by Horai Co., Ltd.), when the sheet pelletizer was operated at a frequency of a motor for a longitudinal cutting blade of 3.6 to 5.5 Hz, a drawing speed of 0.4 to 0.6 m/min., and a frequency of a motor for a transverse cutting blade of 7.0 to 12.0 Hz, and the transverse cutting blade part was exposed to cold air (corresponding to a dew point of -60°C) from a spot cooler.

Rectangular pellets of the nonionic alkylene oxide water-soluble resin obtained in this way were 2.0 mm x 4.0 mm x 3.0 mm in average size and 0.4 weight % in toluene content. The moisture content of the obtained rectangular pellets was 1500 ppm.

The results of the recycling experiments that were carried out in the above described way about the pellet-shaped nonionic alkylene oxide resin are shown in Table 9.

**Table 9**

| | Mw | Mw/Mn | Melting point |
|---|---|---|---|
| | | | (°C) |
| Physical properties of pellets without recycling of nonionic alkylene oxide resin | 107,000 | 1.65 | 48 |
| Physical properties of pellets after 3 hours from start of recycling of nonionic alkylene oxide resin | 107,000 | 1.65 | 48 |
| Physical properties of pellets after 6 hours from start of recycling of nonionic alkylene oxide resin | 107,000 | 1.65 | 48 |
| Physical properties of pellets after 12 hours from start of recycling of nonionic alkylene oxide resin | 107,000 | 1.65 | 48 |

From Table 9, it has been found that there is no problem in the recycling of the pellet-shaped nonionic alkylene oxide resin. Moreover, it has been also found that the recycling time has no influence on the physical properties of the pellet-shaped nonionic alkylene oxide resin.

### INDUSTRIAL APPLICATION

The manufacturing process of the present invention makes it possible to obtain a pellet-shaped nonionic alkylene oxide resin in a manner which is excellent in stability, economical efficiency and productivity and easy, wherein the pellet-shaped nonionic alkylene oxide resin, as a high-molecular material useful in a variety of applications, has a suitable molecular weight Mw and physical properties and is also excellent in the stability of the physical properties and further is also excellent in the handling property after the manufacture.

## Claims

1. A process for manufacturing a pellet-shaped nonionic alkylene oxide resin, comprising the steps of: obtaining a nonionic alkylene oxide resin having fluidity by volatilizing a solvent from a nonionic alkylene oxide resin solution obtained in advance by solution polymerization; and then pelletizing the nonionic alkylene oxide resin having fluidity.

2. The process for manufacturing a pellet-shaped nonionic alkylene oxide resin according to claim 1, further comprising the steps of, in advance of the pelletizing step, molding the resin into a sheet shape and cooling it.

3. The process for manufacturing a pellet-shaped nonionic alkylene oxide resin according to claim 1 or 2, wherein the solution polymerization to obtain the nonionic alkylene oxide resin is carried out by reusing the solvent recovered in the solvent-volatilizing step.

4. The process for manufacturing a pellet-shaped nonionic alkylene oxide resin according to any one of claims 1 to 3, further comprising a step of classifying the pellets into a prescribed particle size, wherein the residual pellets other than the prescribed particle size are mixed into a nonionic alkylene oxide resin and/or its solution before the pelletizing step.

5. The process for manufacturing a pellet-shaped nonionic alkylene oxide resin according to any one of claims 1 to 4, wherein in the step of obtaining a nonionic alkylene oxide resin having fluidity, it is arranged that the nonionic alkylene oxide resin being obtained will have a moisture content of less than 7000 ppm.

6. The process for manufacturing a pellet-shaped nonionic alkylene oxide resin according to any one of claims 1 to 5, wherein in a period extending from obtaining the nonionic alkylene oxide resin till filling it into a storage container in the shape of pellets, the atmosphere is managed so that the nonionic alkylene oxide resin will keep its moisture content being a desired moisture content of less than 7000 ppm.

7. The process for manufacturing a pellet-shaped nonionic alkylene oxide resin according to any one of claims 1 to 5, wherein in a period extending from obtaining the nonionic alkylene oxide resin till filling it into a storage container in the shape of pellets, the moisture content of the nonionic alkylene oxide resin is adjusted to a desired moisture content in the range of 50 ppm to less than 7000 ppm.

8. The process for manufacturing a pellet-shaped nonionic alkylene oxide resin according to claim 7, wherein the adjustment of the moisture content is carried out by adding water so that the nonionic alkylene oxide resin will have the desired moisture content.
